(19) Europäisches Patentamt
European Patent Office
Office européen des brevets

(11) EP 4 625 845 A1

(12) EUROPEAN PATENT APPLICATION
published in accordance with Art. 153(4) EPC

(43) Date of publication:
01.10.2025 Bulletin 2025/40

(21) Application number: 22966524.5

(22) Date of filing: 25.11.2022

(51) International Patent Classification (IPC):
H04B 10/2513 (2013.01)    H04B 10/61 (2013.01)

(52) Cooperative Patent Classification (CPC):
H04B 10/2513; H04B 10/61

(86) International application number:
PCT/JP2022/043554

(87) International publication number:
WO 2024/111115 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT, Inc.
Tokyo 100-8116 (JP)

(72) Inventors:
• YAMAZAKI Etsushi
  Musashino-shi, Tokyo 180-8585 (JP)

• YOSHIDA Mitsuteru
  Musashino-shi, Tokyo 180-8585 (JP)
• NAKAMURA Masanori
  Musashino-shi, Tokyo 180-8585 (JP)
• SASAI Takeo
  Musashino-shi, Tokyo 180-8585 (JP)
• SAIDA Takashi
  Musashino-shi, Tokyo 180-8585 (JP)
• KISAKA Yoshiaki
  Musashino-shi, Tokyo 180-8585 (JP)

(74) Representative: Brevalex
Tour Trinity
1 B Place de la Défense
92400 Courbevoie (FR)

(54) **WAVELENGTH DISPERSION COMPENSATION DEVICE AND COEFFICIENT OPTIMIZATION METHOD**

(57) A chromatic dispersion compensation device including: a block division unit that divides an input signal on which chromatic dispersion distortion is loaded into blocks of a fixed length such that an overlap of a predetermined length with an adjacent block is generated; a Fourier transform unit that converts each block into a plurality of frequency domain signals by performing Fourier transform for each of the divided blocks; a coefficient multiplication unit that multiplies each of the converted plurality of frequency domain signals by each of a chromatic dispersion compensation coefficient and a window function or a value obtained by combining a dispersion compensation coefficient and a window function, and generates a coefficient-applied block obtained by summing multiplication results; an inverse Fourier transform unit that performs inverse Fourier transform on the generated coefficient-applied block; an overlap cut unit that removes a portion of the overlap from the converted coefficient-applied block, and generates an output signal; and a weighting coefficient optimization unit that optimizes the window function such that waveform distortion in a time domain is minimized on a basis of the generated output signal and an expected waveform obtained by performing chromatic dispersion compensation on the input signal.

Fig. 1

## Description

Technical Field

The present invention relates to a chromatic dispersion compensation device and a coefficient optimization method.

Background Art

In digital coherent optical communication, studies have been conducted for large-capacity and long-distance transmission by compensating distortion of signals generated in an optical transmission device, an optical transmission line, and an optical reception device by digital signal processing. In particular, in a case where the transmission distance is increased, waveform distortion generated in an optical transmission line becomes large, a load of digital signal processing performed by an optical reception device becomes heavy, and processing cannot be performed at a time. Therefore, in an optical reception device, a signal processing method has been proposed in which a reception signal is divided into a plurality of block sizes, the reception signals of the divided block sizes are converted into respective frequency domain signals, calculation processing of multiplying each of the frequency domain signals by chromatic dispersion compensation and a window function is performed, and then the signals are combined, thereby compensating for chromatic dispersion (see, for example, Non Patent Literature 1).

Citation List

Non Patent Literature

Non Patent Literature 1: K. Ishihara, T. Kobayashi, R. Kudo, Y. Takatori, A. Sano, E. Yamada, H. Masuda, M. Matsui, M. Mizoguchi and Y. Miyamoto, "Frequency-domain equalisation without guard interval for optical transmission systems", ELECTRONICS LETTERS 4th December 2008 Vol. 44 No. 25

Summary of Invention

Technical Problem

In the technology described in Non Patent Literature 1, input digital waveform data is divided into a certain block length, and each of pieces of divided data is Fourier-transformed. At this time, division is performed such that each block includes an overlap. Then, in the technology described in Non Patent Literature 1, a signal in the frequency domain of each block length is multiplied by an inverse response function of chromatic dispersion, and data of a time waveform is regained by inverse Fourier transform. Thereafter, in the technology described in Non Patent Literature 1, an overlapping portion is deleted and then connection is performed so that a continuous time waveform is regained. However, in the conventional signal processing method, there is an issue that, unless each signal in the frequency domain is combined using an optimum weight, compensation accuracy of chromatic dispersion is deteriorated, and as a result, signal quality is deteriorated.
In view of the above circumstances, an object of the present invention is to provide a technology capable of optimizing a weighting coefficient used for chromatic dispersion compensation.

Solution to Problem

One aspect of the present invention is a chromatic dispersion compensation device including: a block division unit that divides an input signal on which chromatic dispersion distortion is loaded into blocks of a fixed length such that an overlap of a predetermined length with an adjacent block is generated; a Fourier transform unit that converts each block into a plurality of frequency domain signals by performing Fourier transform for each of the blocks divided by the block division unit; a coefficient multiplication unit that multiplies each of the plurality of frequency domain signals converted by the Fourier transform unit by each of a chromatic dispersion compensation coefficient and a window function or a value obtained by combining a dispersion compensation coefficient and a window function, and generates a coefficient-applied block obtained by summing multiplication results; an inverse Fourier transform unit that performs inverse Fourier transform on the coefficient-applied block generated by the coefficient multiplication unit; an overlap cut unit that removes a portion of the overlap from the coefficient-applied block converted by the inverse Fourier transform unit, and generates an output signal; and a weighting coefficient optimization unit that optimizes the window function such that waveform distortion in a time domain is minimized on a basis of the output signal generated by the overlap cut unit and an expected waveform obtained by performing chromatic dispersion compensation on the input signal.

One aspect of the present invention is a coefficient optimization method including: dividing an input signal on which chromatic dispersion distortion is loaded into blocks of a fixed length such that an overlap of a predetermined length with an adjacent block is generated; converting each block into a plurality of frequency domain signals by performing Fourier transform for each of the divided blocks; multiplying each of the converted plurality of frequency domain signals by each of a chromatic dispersion compensation coefficient and a window function or a value obtained by combining a dispersion compensation coefficient and a window function; generating a coefficient-applied block obtained by summing multiplication results; performing inverse Fourier transform on the coefficient-applied block; removing a portion of the overlap from the converted coefficient-applied block, and generating an output signal; and optimizing the window function such that waveform distortion in a time domain is minimized on a basis of the generated output signal and an expected waveform obtained by performing chromatic dispersion compensation on the input signal.

Advantageous Effects of Invention

According to the present invention, a weighting coefficient used for chromatic dispersion compensation can be optimized.

Brief Description of Drawings

[Fig. 1] A diagram illustrating a configuration example of an optical reception device according to a first embodiment.
[Fig. 2] A diagram illustrating a configuration example of a chromatic dispersion compensation unit according to the first embodiment.
[Fig. 3] A diagram illustrating a configuration example of a multiplication unit according to the first embodiment.
[Fig. 4] A diagram illustrating an example of window functions in the first embodiment.
[Fig. 5] A flowchart illustrating a flow of processing of a chromatic dispersion compensation device according to the first embodiment.
[Fig. 6] A diagram for describing an effect according to the first embodiment.
[Fig. 7] A diagram illustrating a configuration example of a weighting coefficient optimization device according to a modification of the first embodiment.
[Fig. 8] A diagram for describing an outline of a method for calculating an optimum window function by linear approximation in a second embodiment.
[Fig. 9] A diagram illustrating an example of a window function calculated by linear approximation in the second embodiment.

Description of Embodiments

Hereinafter, embodiments of the present invention will be described with reference to drawings.

(First Embodiment)

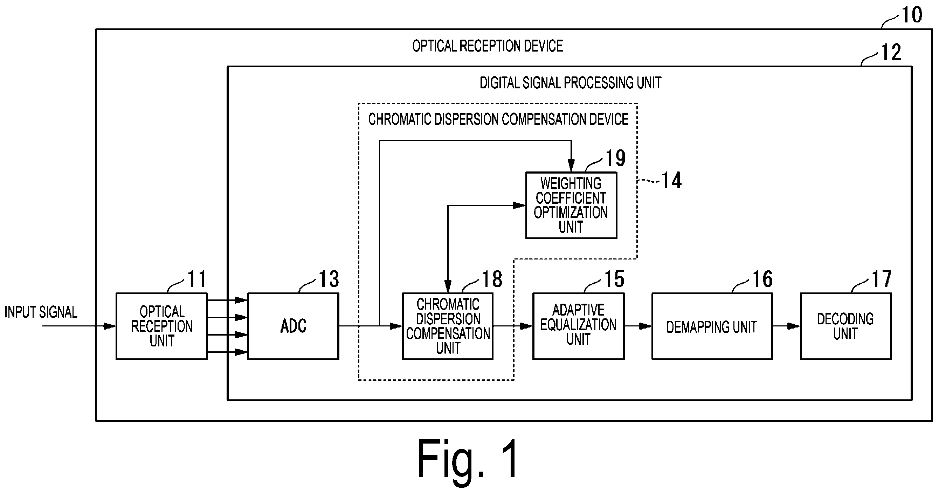

Fig. 1 is a diagram illustrating a configuration example of an optical reception device 10 according to a first embodiment. The optical reception device 10 is connected to an optical transmission device via an optical transmission line. The optical reception device 10 receives an optical signal transmitted from the optical transmission device. The optical reception device 10 includes an optical reception unit 11 and a digital signal processing unit 12. The digital signal processing unit 12 includes an ADC 13, a chromatic dispersion compensation device 14, an adaptive equalization unit 15, a demapping unit 16, and a decoding unit 17.

The optical reception unit 11 causes local light to interfere with an optical signal input from the outside (hereinafter referred to as "input signal"), and converts the input signal into a baseband analog electric signal. Here, chromatic dispersion generated in the optical transmission line is loaded on the input signal.

The ADC 13 converts the analog electric signal output from the optical reception unit 11 into a digital electric signal.

The chromatic dispersion compensation device 14 compensates for chromatic dispersion generated in the optical transmission line by frequency domain equalization. The chromatic dispersion compensation device 14 includes a chromatic dispersion compensation unit 18 and a weighting coefficient optimization unit 19.

The chromatic dispersion compensation unit 18 compensates for chromatic dispersion generated in the optical transmission line on the basis of a chromatic dispersion compensation coefficient and a window function set by the weighting coefficient optimization unit 19 and the digital electric signal output from the ADC 13. The chromatic dispersion compensation coefficient is estimated by the weighting coefficient optimization unit 19. The window function is optimized by the weighting coefficient optimization unit 19. The chromatic dispersion compensation coefficient and the window function are weighting coefficients used for chromatic dispersion compensation.

The weighting coefficient optimization unit 19 estimates a chromatic dispersion compensation amount on the basis of the digital electric signal output from the ADC 13. The weighting coefficient optimization unit 19 sets a chromatic dispersion compensation coefficient corresponding to the estimated chromatic dispersion compensation amount in the chromatic dispersion compensation unit 18. Note that, in a case where the chromatic dispersion compensation amount is known by being measured by another measurement method, the weighting coefficient optimization unit 19 may not estimate the chromatic dispersion compensation amount. In this case, the weighting coefficient optimization unit 19 sets a chromatic dispersion compensation coefficient corresponding to the known chromatic dispersion compensation amount in the chromatic dispersion compensation unit 18.

Furthermore, the weighting coefficient optimization unit 19 optimizes the window function on the basis of the digital electric signal output from the ADC 13. Examples of a method for optimizing the window function include a method using the least squares method of a cost function and a method using linear approximation. In the first embodiment, a configuration in which a window function is optimized by the method using the least squares method of a cost function will be described.

The adaptive equalization unit 15 dynamically estimates and equalizes a dynamically changing polarization, laser phase noise, and the like generated in the optical transmission line by digital signal processing such as finite impulse response (FIR) filter and frequency domain equalization.

The demapping unit 16 converts symbol information of a signal equalized by the adaptive equalization unit 15 into a bit sequence.

The decoding unit 17 performs error correction on the bit sequence output from the demapping unit 16 by an error correction decoding method corresponding to error correction coding performed by the optical transmission device.

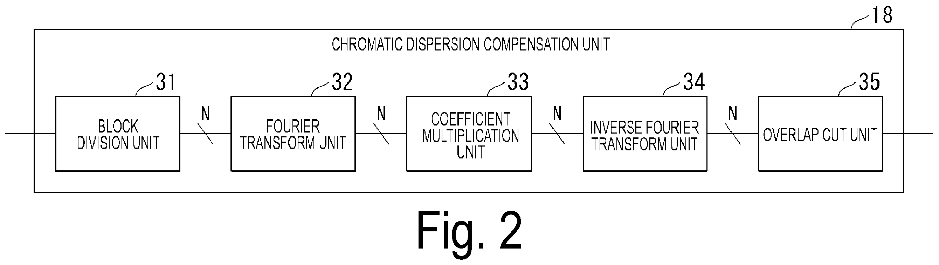

Fig. 2 is a diagram illustrating a configuration example of the chromatic dispersion compensation unit 18 according to the first embodiment. The chromatic dispersion compensation unit 18 includes a block division unit 31, a Fourier transform unit 32, a coefficient multiplication unit 33, an inverse Fourier transform unit 34, and an overlap cut unit 35. In Fig. 2, "N" illustrated on a connection line between the functional units indicates that a block including N values is input and output. This similarly applies to other drawings after Fig. 2.

The block division unit 31 divides a digital signal output from the ADC 13 into blocks such that M samples having a block size N of Fourier transform performed by the Fourier transform unit 32 overlap with adjacent blocks. Here, N is a positive integer, and M is an integer that satisfies $N > M$. Both N and M are often powers of 2. In this manner, overlapping with an adjacent block in a time domain is referred to as overlap, and in a case where the block size N is 1024 and the overlap ratio is 50%, $M = 512$ is satisfied. The block division unit 31 performs serial-parallel conversion on the divided blocks and outputs each of the blocks after the serial-parallel conversion.

The Fourier transform unit 32 performs Fourier transform on the blocks sequentially output from the block division unit 31. That is, the Fourier transform unit 32 transforms a time domain signal of N samples into a frequency domain signal X of N bins. The Fourier transform unit 32 performs discrete Fourier transform or fast Fourier transform in a case of performing Fourier transform.

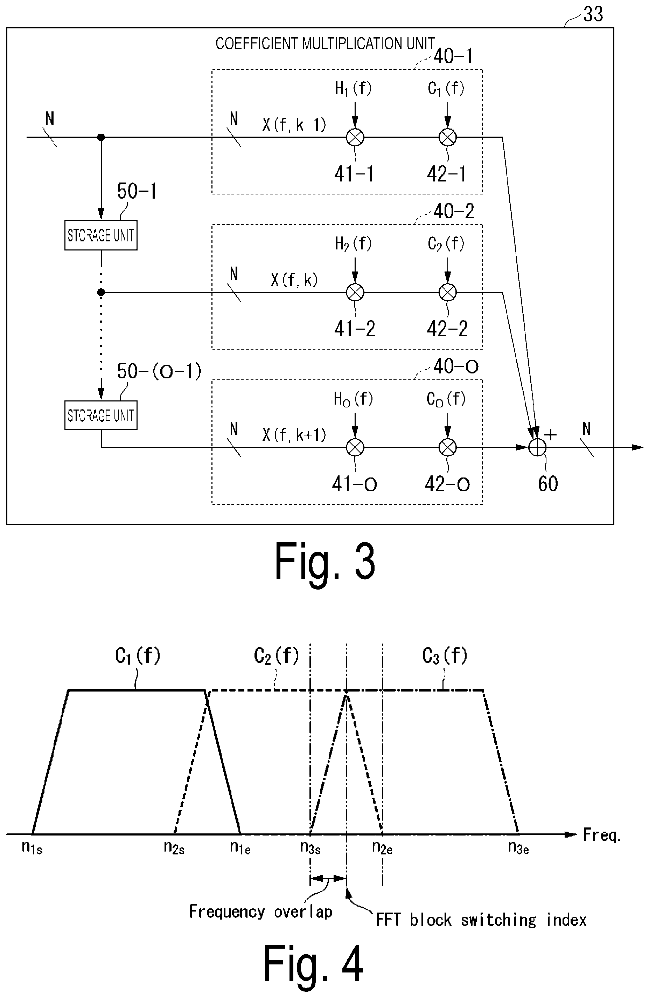

The coefficient multiplication unit 33 multiplies values of the respective bins of the frequency domain signal X output from the Fourier transform unit 32 by different coefficients. Specifically, the coefficient multiplication unit 33 multiplies values of the respective bins of the frequency domain signal X by different chromatic dispersion compensation coefficients and different window functions. As illustrated in Fig. 3, the coefficient multiplication unit 33 includes a plurality of multiplication units 40-1 to 40-O, one or more storage units 50-1 to 50-(O - 1), and an addition unit 60. Note that O is an integer of 2 or more. In the following description, a case where O is 3 will be described as an example.

Each of the storage units 50-1 to 50-2 stores a block output by the Fourier transform unit 32 every unit time. For example, the storage unit 50-1 stores a block at time t-1. The storage unit 50-2 stores a block at time t-2.

The multiplication units 40-1 to 40-3 include chromatic dispersion compensation coefficient multiplication units 41-1 to 41-3 and window function multiplication units 42-1 to 42-3. The chromatic dispersion compensation coefficient multiplication unit 41-1 multiplies a block output from the Fourier transform unit 32 by a chromatic dispersion compensation coefficient $H_1(f)$ set by the weighting coefficient optimization unit 19. The window function multiplication unit 42-1 multiplies a block multiplied by the chromatic dispersion compensation coefficient $H_1(f)$ by a window function $C_1(f)$.

The multiplication units 40-2 to 40-3 capture blocks stored in the respective storage units 50-1 to 50-2. The chromatic dispersion compensation coefficient multiplication units 41-2 to 41-3 multiply the captured blocks by respective chromatic dispersion compensation coefficients $H_2(f)$ to $H_3(f)$ set by the weighting coefficient optimization unit 19. The window function multiplication units 42-2 to 42-3 multiply the blocks multiplied by the chromatic dispersion compensation coefficients $H_2(f)$ to $H_3(f)$ by respective window functions $C_2(f)$ to $C_3(f)$. Each of the multiplication units 40-1 to 40-3 outputs a multiplication result to the addition unit 60.

Note that in each of the multiplication units 40 of the coefficient multiplication unit 33, the order in which multiplication by the chromatic dispersion compensation coefficient H(f) and the window function C(f) is performed may be any order. The product of the chromatic dispersion compensation coefficient H(f) and the window function C(f) may be calculated in advance, and each of the multiplication units 40 of the coefficient multiplication unit 33 may perform multiplication by the product of the chromatic dispersion compensation coefficient H(f) and the window function C(f) calculated in advance. For example, the product of the chromatic dispersion compensation coefficient $H_1(f)$ and the window function $C_1(f)$ may be calculated in advance, and the multiplication unit 40-1 may multiply a block by the product of the chromatic dispersion compensation coefficient $H_1(f)$ and the window function $C_1(f)$ calculated in advance.

The addition unit 60 adds multiplication results output from the respective multiplication units 40-2 to 40-3 for each of the bins. As a result, the addition unit 60 calculates an output signal including N values.

The inverse Fourier transform unit 34 performs inverse Fourier transform for each block output by the coefficient multiplication unit 33. That is, the inverse Fourier transform unit 34 transforms a frequency domain signal of N bins into a time domain signal of N samples. The inverse Fourier transform unit 34 performs inverse discrete Fourier transform or inverse fast Fourier transform in a case of performing inverse Fourier transform.

The overlap cut unit 35 cuts portions of the M samples that are overlapping portions from a block output by the inverse Fourier transform unit 34, performs parallel-serial conversion on the block after the cutting, and outputs a time domain signal Y including samples of a length (N - M).

Fig. 4 is a diagram illustrating an example of window functions in the first embodiment. In Fig. 4, $n_{1s}$ and $n_{1e}$ represent the frequency range of the window function $C_1(f)$, $n_{2s}$ and $n_{2e}$ represent the frequency range of the window function $C_2(f)$, and $n_{3s}$ and $n_{3e}$ represent the frequency range of the window function $C_3(f)$. As a window function in the first embodiment, a frequency overlap (FOL) representing a frequency domain overlap is defined as a control parameter of power and performance, and the window function includes overlaps FOL on the left and right around an FFT block switching index (FSI) as a frequency switching point. By these frequency overlaps being made large, a dispersion compensation penalty can be reduced, but on the other hand, power consumption tends to increase since the amount of signals to be handled increases.

Waveform distortion due to chromatic dispersion is a phenomenon in which group delay varies depending on the frequency of a signal spectrum. The size of Fourier can be reduced using signals in the frequency domain obtained by a plurality of blocks. At that time, an output signal of the used blocks changes depending on the frequency. If the blocks are rapidly switched at the switching point of the blocks in the frequency domain, a steep filter having a very large change in the frequency domain is applied, and waveform distortion that causes a long response time occurs in the time domain. Therefore, by a width being given to the switching of the blocks in the frequency domain, the window function being applied to a plurality of related blocks around the switching point, and signals of the plurality of blocks being combined and used, the dispersion compensation penalty can be brought close to performance in ideal large fast Fourier transform.

Therefore, the weighting coefficient optimization unit 19 according to the present embodiment optimizes the window function such that the frequency overlaps are minimized in order to minimize signal distortion in the limited frequency overlaps.

Next, a method of optimizing the window function by the weighting coefficient optimization unit 19 in the first embodiment will be described. First, as a premise, assume that $X_{ext}$ is obtained by combining signals in a frequency domain of a plurality of blocks used for combining by the addition unit 60. Here, when the signals in the frequency domain of the plurality of blocks are combined, the signals in the frequency domains are combined by unwraping an overlap of the signals in the frequency domain and arranging the signals. Unwraping an overlap of the signals in the frequency domain means that an overlap of overlapping regions of adjacent signals in the frequency domain is expanded. The combined frequency domain signal $X_{ext}$ is an aspect of a combined signal vector.

A time domain signal Y(k) output by the overlap cut unit 35 is expressed by a product of an inverse discrete Fourier transformation (DFT) matrix $IDFT_{ext}$ obtained by the inverse Fourier transform unit 34, $X_{ext}(k)$, a dispersion compensation coefficient $H_{ext}$, and a window function $C_{ext}$ as expressed by the following Formula (1). Note that k represents a block number.

[Math. 1]

$$Y = IDFT_{ext} * X_{ext} \bigcirc\!\!\!\!\bullet\ H_{ext} \bigcirc\!\!\!\!\bullet\ C_{ext}$$

... FORMULA (1)

In Formula (1), * (asterisk) represents a matrix product, and ∘• (• is inside ∘) represents a product for each element. The weighting coefficient optimization unit 19 is only required to calculate the window function $C_{ext}$ that minimizes an error between a reference signal R(k) and the time domain signal Y(k) output from the overlap cut unit 35 where a signal obtained by performing chromatic dispersion compensation on the digital electric signal output from the ADC 13 is a reference signal R. For example, the weighting coefficient optimization unit 19 multiplies the digital electric signal output from the ADC 13 by a chromatic dispersion compensation coefficient corresponding to the estimated chromatic dispersion compensation amount to generate the reference signal R subjected to chromatic dispersion compensation. The optimization cost function L is expressed by a square error between the time domain signal Y(k) output from the overlap cut unit 35 and the reference signal R(k) as expressed in the following Formula (2).

[Math. 2]

$$L = \sum_{k=1}^{K}[Y(k) - R(k)]^{+}[Y(k) - R(k)] \quad \text{... FORMULA (2)}$$

Here, when a covariance matrix $M_{cov}$ and a correlation vector $V_{cor}$ expressed in the following Formula (3) are defined, the optimum window function $C_{ext}^{*}$ can be expressed by the following Formula (4) according to a retention condition of the least squares method of a cost function L. The weighting coefficient optimization unit 19 calculates an optimum window function $C_{ext}^{*}$ applied to each of the multiplication units 40 on the basis of the following Formula (4).

Here, the outlines of Formulas (3) and (4) will be described. First, the weighting coefficient optimization unit 19 generates one frequency domain signal $X_{ext}$ by unwrapping an overlap of a plurality of frequency domain signals and combining the plurality of frequency domain signals. Furthermore, the weighting coefficient optimization unit 19 generates one combined chromatic dispersion compensation coefficient $H_{ext}$ (combined coefficient vector) by unwrapping an overlap of a plurality of chromatic dispersion compensation coefficients by which the plurality of respective frequency domain signals is multiplied and combining the plurality of chromatic dispersion compensation coefficients. Furthermore, the weighting coefficient optimization unit 19 generates one combined inverse discrete Fourier matrix $IDFT_{ext}$ by multiplying the plurality of frequency domain signals by the respective chromatic dispersion compensation coefficients and then unwrapping an overlap of the matrices corresponding to inverse Fourier transform by the inverse Fourier transform unit 34 and combining the matrices. Then, the weighting coefficient optimization unit 19 calculates the element product of the covariance matrix of the frequency domain signal $X_{ext}$ and the covariance matrices of the combined chromatic dispersion compensation coefficient $H_{ext}$ and the combined inverse discrete Fourier matrix $IDFT_{ext}$. Thereafter, the weighting coefficient optimization unit 19 calculates the inverse matrix of the calculated element product.

The weighting coefficient optimization unit 19 generates a correlation vector that takes an element product of the combined chromatic dispersion compensation coefficient $H_{ext}$ after calculating the combined chromatic dispersion compensation coefficient $H_{ext}$, the frequency domain signal $X_{ext}$, and a matrix product of a combined inverse discrete Fourier matrix $IDFT_{ext}$ complex conjugate and the reference signal R. The weighting coefficient optimization unit 19 optimizes the window function by multiplying the generated correlation vector by the inverse matrix of the calculated covariance matrix.

[Math. 3]

$$M_{cov} = \sum_{k=1}^{K}[H_{ext} * H_{ext}^{+}] \odot [X_{ext}(k) * X_{ext}^{+}(k)] \odot [IDFT_{ext}^{+} * IDFT_{ext}] \quad (N_C \times N_C \text{ MATRIX})$$

$$V_{cor} = \sum_{k=1}^{K} H_{ext}^{+} \odot X_{ext}^{+}(k) \odot IDFT_{ext}^{+} * R(k) \quad (N_C \times 1 \text{ COLUMN VECTOR})$$

$$\text{... FORMULA (3)}$$

[Math. 4]

$$C_{ext}^{*} = \underset{C_{ext}}{\arg\min} L = (M_{cov} + \lambda I_{N_C})^{-1} V_{cor} \quad \text{... FORMULA (4)}$$

Note that in Formulas (3) and (4), $I_{Nc}$ represents an identity matrix of $_{Nc}^{*}$ $_{Nc}$, $N_c$ represents a length of the window function, and $\lambda$ represents an adjustment parameter of a normalization term. Note that in a case of $\lambda = 0$ is satisfied, a condition that there is no term of the identity matrix is also set.

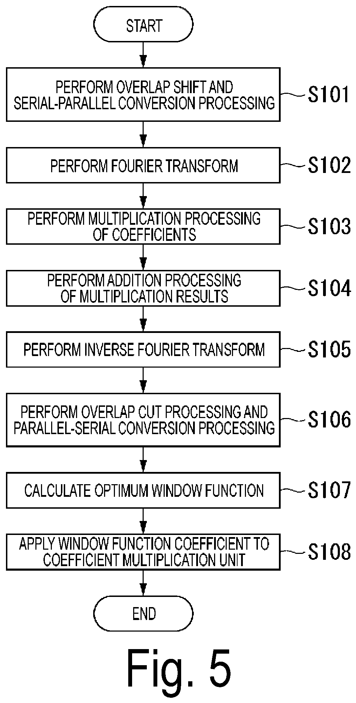

Fig. 5 is a flowchart illustrating a flow of processing of the chromatic dispersion compensation device 14 according to the first embodiment.

The block division unit 31 captures a digital signal output from the ADC 13. The block division unit 31 divides a time domain signal into a plurality of blocks by shifting sections of the blocks such that M/N overlaps with adjacent blocks are generated. The block division unit 31 buffers the plurality of blocks generated by the division in an internal storage area and performs serial-parallel conversion, thereby generating a plurality of blocks. The block division unit 31 outputs the generated blocks to the Fourier transform unit 32 for each of the blocks (step S101).

The Fourier transform unit 32 performs Fourier transform on the blocks sequentially output from the block division unit 31 (step S102). The coefficient multiplication unit 33 performs the following processing on each of the blocks of a frequency domain signal divided into blocks for each N bins output by the Fourier transform unit 32. Specifically, the coefficient multiplication unit 33 multiplies a chromatic dispersion compensation coefficient and a window function that are different values for each time position and are different for each frequency position. Each of the storage units 50-1 to 50-2 stores a block output by the Fourier transform unit 32 every unit time. For example, in a case where a block at time t output by the Fourier transform unit 32 is Xm(f), the storage unit 50-1 stores a block Xm-1(f) at time t-1. The storage unit 50-2 stores a block Xm-2(f) at time t-2.

Each of the multiplication units 40-1 to 40-3 captures frequency domain signals from the respective storage units 50-1 to 50-2. The multiplication units 40-1 to 40-3 multiply the captured frequency domain signals by the respective chromatic dispersion compensation coefficients $H_1(f)$ to $H_3(f)$ and window functions $C_1(f)$ to $C_3(f)$. Then, each of the multiplication units 40-1 to 40-3 outputs a multiplication result to the addition unit 60 (step S103).

The addition unit 60 adds multiplication results output from the multiplication units 40-1 to 40-3 to calculate a frequency domain signal (step S104). The inverse Fourier transform unit 34 performs inverse Fourier transform on the frequency domain signal calculated by the addition unit 60 to generate a time domain signal (step S105). The inverse Fourier transform unit 34 outputs the generated time domain signal to the overlap cut unit 35.

The overlap cut unit 35 cuts portions of M samples that are overlapping portions from each block included in the time domain signal output by the inverse Fourier transform unit 34. The overlap cut unit 35 performs parallel-serial conversion on each block including (N - M) samples from which the overlapping portions have been removed to generate and output a serial signal (step S106).

The weighting coefficient optimization unit 19 calculates an optimum window function on the basis of the serial signal output from the overlap cut unit 35 and the signal reference signal R obtained by performing chromatic dispersion compensation on the digital electric signal output from the ADC 13 (step S107). The weighting coefficient optimization unit 19 applies the calculated window function to the coefficient multiplication unit 33 (step S108). Specifically, the weighting coefficient optimization unit 19 sets an optimum window function for each of the multiplication units 40-1 to 40-3 included in the coefficient multiplication unit 33. As a result, the window function multiplication unit 42-1 included in the multiplication unit 40-1 performs a calculation using the newly set window function $C_1(f)$. Similarly, the window function multiplication units 42-2 to 42-3 included in the multiplication units 40-2 to 40-3 perform calculations using the newly set window functions $C_2(f)$ to $C_3(f)$.

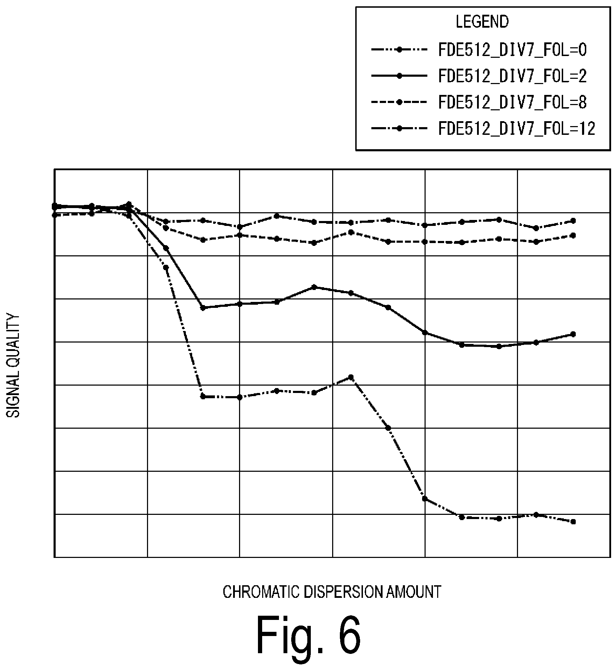

Fig. 6 is a diagram for describing an effect according to the first embodiment. The diagram illustrated in Fig. 6 is a diagram in which a frequency overlap is changed, each window function is optimized, and the penalty of dispersion compensation is evaluated. In Fig. 6, the horizontal axis represents chromatic dispersion, and the vertical axis represents a Q value representing signal quality calculated from a bit error rate. Note that in the legend, "FDE512" represents the block size of Fourier transform, "DIV7" represents the maximum value of the number of divisions, and "FOL" represents the frequency overlap.

The diagram illustrated in Fig. 6 was simulated under the following conditions.

(Simulation Conditions)

Modulation method: 16QAM (uniform)
Baudrate: 60-65GBd
Analog F characteristic: Ideal

It can be seen that CD = 0 is the reference signal quality, and in a case where FOL = 0 is satisfied, the Q value deteriorates as the CD increases, and the penalty is large. On the basis of the results illustrated in Fig. 6, it can be seen that the penalty decreases as the FOL increases. In the method in the present embodiment, since an optimum window function can be calculated for each frequency overlap, the penalty can be minimized. Furthermore, by a frequency overlap being selected according to the allowable power, the window function can be optimized and the power consumption can be reduced.

According to the optical reception device 10 formed as described above, there is included the block division unit 31 that divides an electric digital input signal obtained from an input optical signal into blocks of a fixed length such that an overlap of a predetermined length with an adjacent block is generated; the Fourier transform unit 32 that converts each block into a plurality of frequency domain signals by performing Fourier transform for each of the blocks; the coefficient multiplication unit 33 that multiplies each of the plurality of frequency domain signals by a chromatic dispersion compensation coefficient and a window function, and generates a coefficient-applied block obtained by summing multiplication results; the inverse Fourier transform unit 34 that performs inverse Fourier transform on the coefficient-applied block; the overlap cut unit 35 that removes a portion of the overlap from the coefficient-applied block, and generates an output signal; and the weighting coefficient optimization unit 19 that optimizes the window function such that waveform distortion in a time domain is minimized on a basis of the output signal and the input signal. As a result, an optimum window function for performing combining using an optimum weight can be calculated, and the compensation performance can be exhibited to the maximum.

Since an optimum window function can be calculated for each frequency overlap, a trade-off between the power consumption and the compensation performance can be controlled. Therefore, a weighting coefficient used for chromatic dispersion compensation can be optimized.

(Modification 1)

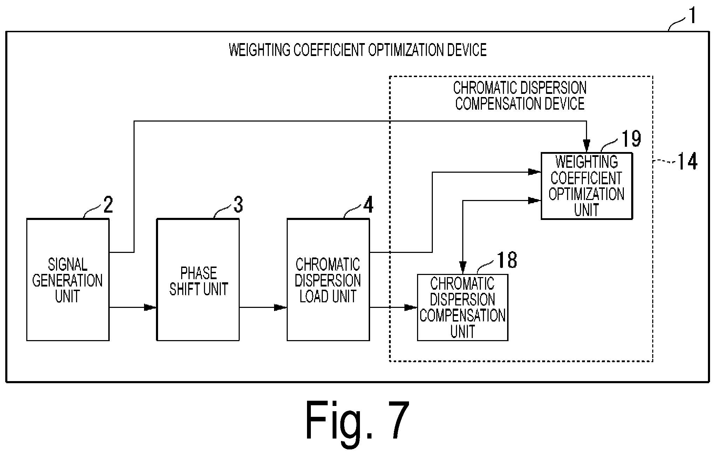

In the above-described embodiment, the configuration has been described in which the chromatic dispersion compensation device 14 optimizes a window function on the basis of a reception signal received from an optical transmission device. The chromatic dispersion compensation device 14 may be configured to obtain an optimum window function in order to minimize an error after compensation using a waveform obtained by performing dispersion load and dispersion compensation on a band-extended Nyquist waveform. In a case of such a configuration, the chromatic dispersion compensation device 14 may be included in, for example, a weighting coefficient optimization device 1 illustrated in Fig. 7.

Fig. 7 is a diagram illustrating a configuration example of the weighting coefficient optimization device 1 according to a modification of the first embodiment. The weighting coefficient optimization device 1 is a device that optimizes a window function that is a weighting coefficient used for frequency domain equalization. The weighting coefficient optimization device 1 includes a signal generation unit 2, a phase shift unit 3, a chromatic dispersion load unit 4, and the chromatic dispersion compensation device 14.

The signal generation unit 2 generates a reference signal R used for optimizing a weighting coefficient. The reference signal R generated by the signal generation unit 2 is a signal having a frequency spectrum equal to or wider than a signal band. The reference waveform R is assumed to be a signal in the time domain. The signal generation unit 2 outputs the generated reference signal R to the phase shift unit 3 and the chromatic dispersion compensation device 14.

The phase shift unit 3 time-phase-shifts the reference signal R generated by the signal generation unit 2 in units of samples or units smaller than samples, thereby generating a large number of waveforms time-phase-shifted in units of samples or units smaller than samples (hereinafter, the waveforms are referred to as "phase shift waveforms"). The phase shift unit 3 outputs a plurality of phase shift waveforms to the chromatic dispersion load unit 4.

The chromatic dispersion load unit 4 loads chromatic dispersion on each of the plurality of phase shift waveforms generated by the phase shift unit 3. Thus, the chromatic dispersion load unit 4 simulates chromatic dispersion generated in an optical transmission line. Note that the chromatic dispersion load unit 4 may intentionally load noise on the plurality of phase shift waveforms as necessary.

The chromatic dispersion compensation device 14 compensates for chromatic dispersion loaded on a signal by frequency domain equalization. The chromatic dispersion compensation device 14 includes the chromatic dispersion compensation unit 18 and the weighting coefficient optimization unit 19.

The chromatic dispersion compensation unit 18 compensates for chromatic dispersion on the basis of a chromatic dispersion compensation coefficient and a window function set by the weighting coefficient optimization unit 19 and the plurality of phase shift waveforms on which the chromatic dispersion is loaded by the chromatic dispersion load unit 4. Specifically, the chromatic dispersion compensation unit 18 divides an input signal by a block size N of Fourier transform, and converts each divided block into a frequency domain signal. At this time, the chromatic dispersion compensation unit 18 performs division into blocks while generating overlaps in the time domain. The frequency domain signal is generated for each of the blocks, but not all frequencies of all the blocks are used, and only a necessary portion is selected and used.

The weighting coefficient optimization unit 19 acquires information of the chromatic dispersion loaded on each of the plurality of phase shift waveforms from the chromatic dispersion load unit 4. The weighting coefficient optimization unit 19 estimates the chromatic dispersion compensation amount on the basis of the acquired information of the chromatic dispersion. The weighting coefficient optimization unit 19 sets a correction compensation coefficient corresponding to the estimated chromatic dispersion compensation amount in the chromatic dispersion compensation unit 18. Note that, in a case where the chromatic dispersion compensation amount is known by being measured by another measurement method, the weighting coefficient optimization unit 19 may not estimate the chromatic dispersion compensation amount. In this case, the weighting coefficient optimization unit 19 sets a correction compensation coefficient corresponding to the known chromatic dispersion compensation amount in the chromatic dispersion compensation unit 18.

Furthermore, the weighting coefficient optimization unit 19 optimizes a window function such that an error between the reference signal R output from the signal generation unit 2 and a serial signal output from the chromatic dispersion compensation unit 18 is minimized. The weighting coefficient optimization unit 19 adds signals from the plurality of blocks for the same frequency by unwrapping an overlap of the signals and arranging the signal. As a result, the weighting coefficient optimization unit 19 combines a plurality of frequency domain signals to generate one combined signal vector. The combined signal vector that is the arranged signals corresponds to the above-described frequency domain signal $X_{ext}$. Similarly, the weighting coefficient optimization unit 19 unwrap overlaps of the dispersion compensation coefficient $H_{ext}$ and the window function $C_{ext}$ and arranges the dispersion compensation coefficient $H_{ext}$ and the window function $C_{ext}$. As a result, the weighting coefficient optimization unit 19 generates one combined coefficient vector by combining a plurality of chromatic dispersion compensation coefficients by which a plurality of respective frequency domain signals is multiplied. The weighting coefficient optimization unit 19 multiplies the frequency domain signal $X_{ext}$ by the dispersion compensation coefficient $H_{ext}$ and the window function $C_{ext}$, and multiplies the multiplication result by an inverse DFT matrix (corresponding to IFFT), thereby performing conversion into a time domain signal. The weighting coefficient optimization unit 19 calculates an optimum window function $C_{ext}$ so that an error between the time domain signal after the conversion and the reference waveform R is minimized.

(Second Embodiment)

In a second embodiment, a configuration for calculating an optimum window function by linear approximation will be described. The functional configuration of an optical reception device 10 according to the second embodiment is similar to that according to the first embodiment, but processing performed by the chromatic dispersion compensation device 14 is different. Hereinafter, differences will be mainly described.

A weighting coefficient optimization unit 19 classifies regions by an index difference using a difference between a frequency index of a window function and the index corresponding to an FFT block switching point FSI as a variable, and optimizes a window function by polynomial approximation using values optimized for the respective regions as coefficients, first-order approximation, or approximation using only an intercept. Note that the index corresponding to the FFT block switching point FSI may be a fractional value.

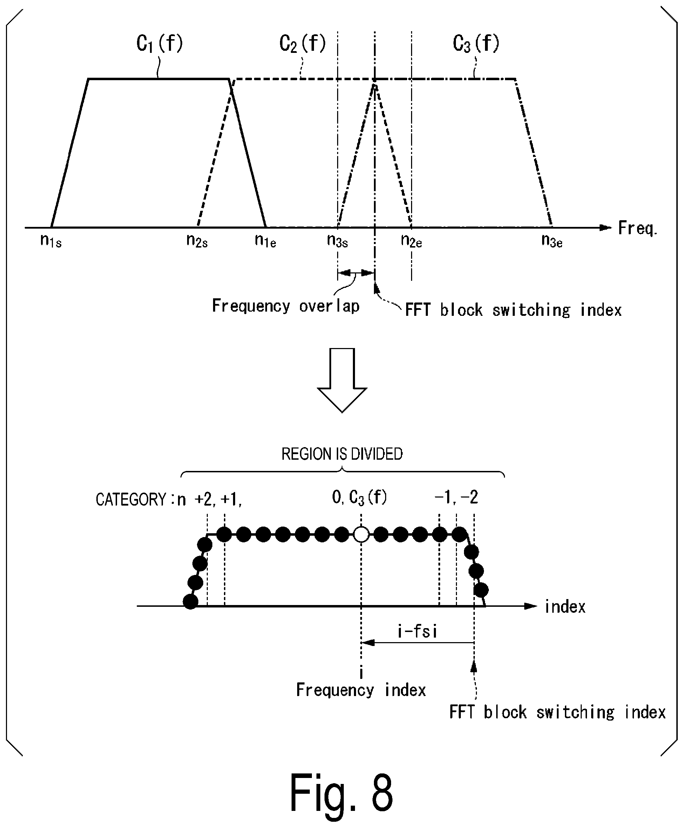

Fig. 8 is a diagram for describing an outline of a method for calculating an optimum window function by linear approximation in the second embodiment. Here, as illustrated in the upper diagram of Fig. 8, a description will be given using window functions $C_1(f)$, $C_2(f)$, and $C_3(f)$ as examples. As illustrated in the upper diagram of Fig. 8, for example, a region of, for example, the window functions $C_2(f)$ and $C_3(f)$ where the frequency ranges overlap is referred to as a frequency overlap. The weighting coefficient optimization unit 19 divides the region by a relative relationship (i - fsi) between a frequency index i and an FFT block switching point FSI. Specifically, as illustrated in the lower diagram of Fig. 8, the weighting coefficient optimization unit 19 divides the region by the value of (i - fsi), for example, such that the range of -1 to 0 is a category "-1" and the range of +1 to +2 is a category "2".

The weighting coefficient optimization unit 19 performs an approximate calculation of a combined window function c(i) on the basis of the following Formula (5).

[Math. 5]

$$C\ (i) = a_n(i - fsi) + b_n, i \in \{0, \ldots, N - 1\}, N: \text{FFT size}$$

$$\ldots \text{FORMULA (5)}$$

Region division is performed at (i - fsi), and the linear approximation coefficients $a_n, b_n$ are set for each divided region. The linear approximation coefficients $a_n, b_n$ depend on the frequency overlap but are independent of a division delay.

In a linear approximation method, a chromatic dispersion range to which an estimated linear coefficient can be applied tends to be narrow. In particular, it becomes narrower as the symbol rate increases. Therefore, there is an issue that a large number of linear approximation coefficients need to be stored. Regarding this issue, the chromatic dispersion range to which an estimated linear approximation coefficient can be applied can be expanded by two-dimensional linear approximation including a variable proportional to a chromatic dispersion amount in linear approximation. Specifically, the weighting coefficient optimization unit 19 calculates the optimum window function c(i) on the basis of the linear approximation formula expressed in the following Formula (6) using a variable $n_{div}$ proportional to chromatic dispersion in addition to the relative relationship (i - fsi) between the frequency index i and the FSI. Using the variable $n_{div}$ is an example, and other variables may be used as long as the variable is proportional to chromatic dispersion. In Formula (6), N represents the block size of Fourier transform, and k represents the index of the category. In order to increase the accuracy of linear approximation, the weighting coefficient optimization unit 19 performs classification into categories by the value of (i - fsi), and optimizes a coefficient of linear approximation in each of the categories. For example, a value obtained by rounding (i - fsi) to an integer may be set as a category. Since regions where the absolute value of (i - fsi) exceeds FOL are flat regions in the lower diagram of Fig. 8, there is little change, and all the regions can be set to be in the same category.

[Math. 6]

$$C_k(i) = a_k(i - fsi) + b_k + c_k(i - fsi)n_{div} + d_k n_{div}, i \in \{0, \dots, N - 1\}$$

... FORMULA (6)

The weighting coefficient optimization unit 19 optimizes coefficients $a_k$, $b_k$, $c_k$, and $d_k$ illustrated in the above Formula (6). Note that there is also a method of fixing the coefficients $a_k$ and $c_k$ to zero for simplicity. As a specific example of the variable proportional to chromatic dispersion, the product of the chromatic dispersion and the square of the sampling rate of $f_{de}$, a variable proportional to a variable obtained by dividing of the block size of Fourier transform is used.

In a case where approximation using only an intercept is performed, the index difference is zero. In this case, since the weighting coefficient optimization unit 19 does not use the variable (i - fsi), the region is divided by a certain range. Thereafter, the weighting coefficient optimization unit 19 calculates the optimum window function c(i) using different coefficients for respective divided regions.

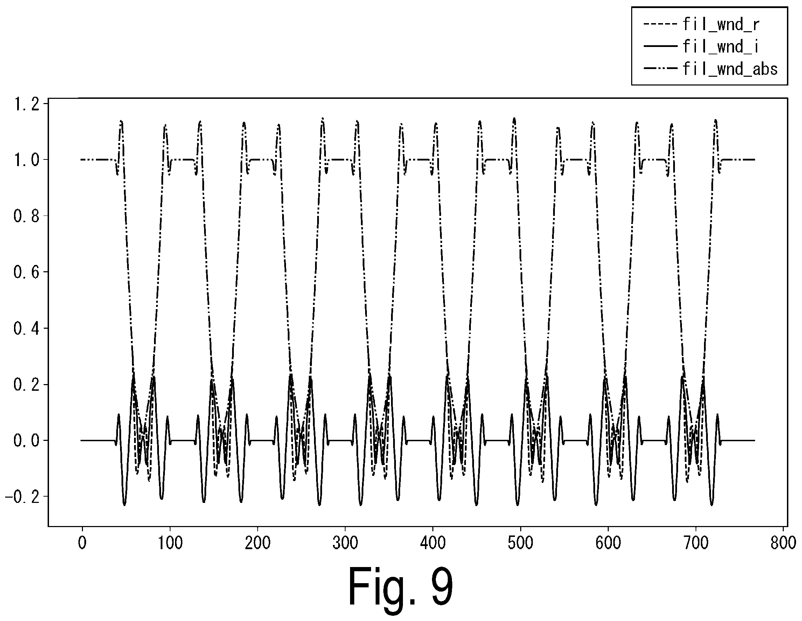

Fig. 9 is a diagram illustrating an example of a window function calculated by linear approximation in the second embodiment.

(Modification 1 Common to First Embodiment and Second Embodiment)

In each of the above-described embodiments, the configuration in which the chromatic dispersion compensation device 14 is included in the optical reception device 10 has been described, but the chromatic dispersion compensation device 14 may be configured as a single device. In such a configuration, the chromatic dispersion compensation device 14 may use, as an input signal, a signal obtained by loading chromatic dispersion distortion on any of the following signals or a signal obtained by combining the following signals and converting the signal into a digital signal. The signal obtained by combining the following signals may be any combination, and is only required to be a combination of two or more of the following signals.

· Signal obtained by convolving an impulse signal with a root raised cosine (RRC) waveform
· Signal of a sequence obtained by upsampling a random signal sequence using an RRC waveform
· Signal having a band that is more extended as compared to a signal that is originally handled
· Plurality of signals of a signal sequence obtained by shifting a phase by one sample
· Plurality of signals of a signal sequence obtained by shifting a phase by fractional samples
· Signal obtained by rotating a phase by 90 degrees
· Signal to which noise is added

Some functions of the optical reception device 10 in the above-described embodiments may be implemented by a computer. In that case, a program for implementing this function may be recorded in a computer-readable recording medium, and the program recorded in the recording medium may be read and executed by a computer system to implement this function. Note that the "computer system" herein includes an operating system (OS) and hardware such as peripheral devices.

Furthermore, the "computer-readable recording medium" refers to a portable medium such as a flexible disc, a magneto-optical disc, a read only memory (ROM), or a compact disc read only memory (CD-ROM), and a storage device such as a hard disk included in a computer system. Further, the "computer-readable recording medium" may include a medium that dynamically holds the program for a short period of time, such as a communication line in a case where the program is transmitted via a network such as the Internet or a communication line such as a telephone line, and a medium that holds the program for a certain period of time, such as a volatile memory inside a computer system serving as a server or a client in that case. The program described above may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, specific configurations are not limited to the embodiments and include design and the like within the gist of the present invention.

Industrial Applicability

The present invention can be applied to a technology for performing chromatic dispersion compensation.

Reference Signs List

| | |
|---|---|
| 10 | Optical reception device |
| 11 | Optical reception unit |
| 12 | Digital signal processing unit |
| 13 | ADC |
| 14 | Chromatic dispersion compensation device |
| 15 | Adaptive equalization unit |
| 16 | Demapping unit |
| 17 | Decoding unit |
| 18 | Chromatic dispersion compensation unit |
| 19 | Weighting coefficient optimization unit |
| 31 | Block division unit |
| 32 | Fourier transform unit |
| 33 | Coefficient multiplication unit |
| 34 | Inverse Fourier transform unit |
| 35 | Overlap cut unit |
| 40-1 to 40-O | Multiplication unit |
| 41-1 to 41-O | Multiplication unit |
| 42-1 to 42-O | Window function multiplication unit |
| 50-1 to 50-(O-1) | Storage unit |
| 60 | Addition unit |

**Claims**

1.   A chromatic dispersion compensation device comprising:

a block division unit configured to divide an input signal on which chromatic dispersion distortion is loaded into blocks of a fixed length such that an overlap of a predetermined length with an adjacent block is generated;
a Fourier transform unit configured to convert each block into a plurality of frequency domain signals by performing Fourier transform for each of the blocks divided by the block division unit;
a coefficient multiplication unit configured to multiply each of the plurality of frequency domain signals converted by the Fourier transform unit by each of a chromatic dispersion compensation coefficient and a window function or a value obtained by combining a dispersion compensation coefficient and a window function, and generates a coefficient-applied block obtained by summing multiplication results;
an inverse Fourier transform unit configured to perform inverse Fourier transform on the coefficient-applied block generated by the coefficient multiplication unit;
an overlap cut unit configured to remove a portion of the overlap from the coefficient-applied block converted by the inverse Fourier transform unit, and generates an output signal; and
a weighting coefficient optimization unit configured to optimize the window function such that waveform distortion in a time domain is minimized on a basis of the output signal generated by the overlap cut unit and an expected waveform obtained by performing chromatic dispersion compensation on the input signal.

2.   The chromatic dispersion compensation device according to claim 1,

wherein the input signal is a test waveform obtained by loading chromatic dispersion distortion on a reference signal pattern having a band equal to or wider than a frequency band of a handled signal, and
the weighting coefficient optimization unit optimizes the window function by a least squares method such that an error between the output signal obtained on a basis of the test waveform and the reference signal pattern is minimized.

3.   The chromatic dispersion compensation device according to claim 2,

wherein the weighting coefficient optimization unit calculates a covariance matrix of a time domain signal obtained by multiplying each of the plurality of frequency domain signals by a chromatic dispersion compensation coefficient and then applying inverse Fourier transform by the inverse Fourier transform unit, calculates a correlation vector among the chromatic dispersion compensation coefficient, the time domain signal, and the reference signal pattern, and optimizes the window function by causing an inverse matrix of the calculated covariance matrix to act on the correlation vector.

4. The chromatic dispersion compensation device according to claim 3,

wherein the weighting coefficient optimization unit
generates one combined signal vector by unwraping an overlap of the plurality of frequency domain signals and combining the plurality of frequency domain signals,
generates one combined coefficient vector by unwraping an overlap of a plurality of chromatic dispersion compensation coefficients by which the plurality of respective frequency domain signals is multiplied and combining the plurality of chromatic dispersion compensation coefficients,
generates one combined inverse discrete Fourier matrix by unwraping matrices corresponding to the inverse Fourier transform and combining the matrices,
calculates an element product of a covariance matrix of the combined signal vector, a covariance matrix of the combined coefficient vector, and a covariance matrix of the combined inverse discrete Fourier matrix,
calculates an inverse matrix of the element product,
generates a correlation vector that takes an element product of the combined coefficient vector after calculating the combined coefficient vector, the combined signal vector, and a matrix product of a complex conjugate of the combined inverse discrete Fourier matrix and the reference signal pattern, and
optimizes the window function by multiplying the correlation vector by an inverse matrix of the covariance matrix.

5. The chromatic dispersion compensation device according to claim 1,

wherein the weighting coefficient optimization unit
classifies a region by an index difference using a difference between a frequency index of a window function and an index that may be a fractional value corresponding to a switching frequency of the blocks as a variable, and optimizes the window function by polynomial approximation using a value optimized for each region as a coefficient, first-order approximation, or approximation using only an intercept.

6. The chromatic dispersion compensation device according to claim 5,

wherein the weighting coefficient optimization unit
optimizes the window function further using a variable proportional to a chromatic dispersion amount in a case where the window function is calculated by the polynomial approximation.

7. The chromatic dispersion compensation device according to any one of claims 1 to 6,

wherein the input signal is
a test waveform obtained by loading chromatic dispersion distortion on any one of a signal obtained by convolving an impulse signal with a root raised cosine (RRC), a signal of a sequence obtained by upsampling a random signal sequence using an RRC waveform, a signal having a band that is more extended as compared to a signal originally handled, a plurality of signals of a signal sequence obtained by shifting a phase by one sample, a plurality of signals of a signal sequence obtained by shifting a phase by fractional samples, a signal obtained by rotating a phase by 90 degrees, a signal obtained by adding noise to the signal obtained by convolving an impulse signal with an RRC, the signal of a sequence obtained by upsampling a random signal sequence using an RRC waveform, the signal having a band that is more extended as compared to a signal originally handled, the plurality of signals of a signal sequence obtained by shifting a phase by one sample, the plurality of signals of a signal sequence obtained by shifting a phase by fractional samples, and the signal obtained by rotating a phase by 90 degrees, or a signal obtained by combining the signal obtained by convolving an impulse signal with an RRC, the signal of a sequence obtained by upsampling a random signal sequence using an RRC waveform, the signal having a band that is more extended as compared to a signal originally handled, the plurality of signals of a signal sequence obtained by shifting a phase by one sample, the plurality of signals of a signal sequence obtained by shifting a phase by fractional samples, the signal obtained by rotating a phase by 90 degrees, and the signal obtained by adding noise to the signal obtained by convolving an impulse signal with an RRC, the signal of a sequence obtained by upsampling a random signal sequence using an RRC waveform, the signal having a band that is more extended as compared to a signal originally handled, the plurality of signals of a signal sequence obtained by shifting a phase by one sample, the plurality of signals of a signal sequence obtained by shifting a phase by fractional samples, and the signal obtained by rotating a phase by 90 degrees.

8. A coefficient optimization method comprising:

dividing an input signal on which chromatic dispersion distortion is loaded into blocks of a fixed length such that an overlap of a predetermined length with an adjacent block is generated;

converting each block into a plurality of frequency domain signals by performing Fourier transform for each of the divided blocks;

multiplying each of the converted plurality of frequency domain signals by each of a chromatic dispersion compensation coefficient and a window function or a value obtained by combining a dispersion compensation coefficient and a window function;

generating a coefficient-applied block obtained by summing multiplication results;

performing inverse Fourier transform on the coefficient-applied block;

removing a portion of the overlap from the converted coefficient-applied block, and generating an output signal; and

optimizing the window function such that waveform distortion in a time domain is minimized on a basis of the generated output signal and an expected waveform obtained by performing chromatic dispersion compensation on the input signal.

# Fig. 1

OPTICAL RECEPTION DEVICE 10

DIGITAL SIGNAL PROCESSING UNIT 12

CHROMATIC DISPERSION COMPENSATION DEVICE 14

INPUT SIGNAL → OPTICAL RECEPTION UNIT 11 → ADC 13 → CHROMATIC DISPERSION COMPENSATION UNIT 18 → ADAPTIVE EQUALIZATION UNIT 15 → DEMAPPING UNIT 16 → DECODING UNIT 17

WEIGHTING COEFFICIENT OPTIMIZATION UNIT 19

EP 4 625 845 A1

CHROMATIC DISPERSION COMPENSATION UNIT

18

| BLOCK DIVISION UNIT | N | FOURIER TRANSFORM UNIT | N | COEFFICIENT MULTIPLICATION UNIT | N | INVERSE FOURIER TRANSFORM UNIT | N | OVERLAP CUT UNIT |

31    32    33    34    35

# Fig. 2

Fig. 3

Fig. 4

```
                    ┌──────────────┐
                    │    START     │
                    └──────────────┘
                           │
                           ▼
         ┌─────────────────────────────────────┐
         │     PERFORM OVERLAP SHIFT AND        │──── S101
         │ SERIAL-PARALLEL CONVERSION PROCESSING│
         └─────────────────────────────────────┘
                           │
                           ▼
         ┌─────────────────────────────────────┐
         │      PERFORM FOURIER TRANSFORM       │──── S102
         └─────────────────────────────────────┘
                           │
                           ▼
         ┌─────────────────────────────────────┐
         │   PERFORM MULTIPLICATION PROCESSING  │──── S103
         │           OF COEFFICIENTS            │
         └─────────────────────────────────────┘
                           │
                           ▼
         ┌─────────────────────────────────────┐
         │     PERFORM ADDITION PROCESSING      │──── S104
         │       OF MULTIPLICATION RESULTS      │
         └─────────────────────────────────────┘
                           │
                           ▼
         ┌─────────────────────────────────────┐
         │   PERFORM INVERSE FOURIER TRANSFORM  │──── S105
         └─────────────────────────────────────┘
                           │
                           ▼
         ┌─────────────────────────────────────┐
         │  PERFORM OVERLAP CUT PROCESSING AND  │──── S106
         │ PARALLEL-SERIAL CONVERSION PROCESSING│
         └─────────────────────────────────────┘
                           │
                           ▼
         ┌─────────────────────────────────────┐
         │   CALCULATE OPTIMUM WINDOW FUNCTION  │──── S107
         └─────────────────────────────────────┘
                           │
                           ▼
         ┌─────────────────────────────────────┐
         │ APPLY WINDOW FUNCTION COEFFICIENT TO │──── S108
         │     COEFFICIENT MULTIPLICATION UNIT  │
         └─────────────────────────────────────┘
                           │
                           ▼
                    ┌──────────────┐
                    │     END      │
                    └──────────────┘
```

# Fig. 5

LEGEND

---•--- FDE512_DIV7_FOL=0

——•—— FDE512_DIV7_FOL=2

---•--- FDE512_DIV7_FOL=8

—•—•— FDE512_DIV7_FOL=12

SIGNAL QUALITY

CHROMATIC DISPERSION AMOUNT

# Fig. 6

Fig. 7

Fig. 8

Fig. 9

## INTERNATIONAL SEARCH REPORT

International application No.

**PCT/JP2022/043554**

| A. | CLASSIFICATION OF SUBJECT MATTER |
|---|---|

*H04B 10/2513*(2013.01)i; *H04B 10/61*(2013.01)i
FI:   H04B10/2513; H04B10/61

According to International Patent Classification (IPC) or to both national classification and IPC

| B. | FIELDS SEARCHED |
|---|---|

Minimum documentation searched (classification system followed by classification symbols)

H04B10/2513; H04B10/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/245984 A1 (NIPPON TELEGRAPH & TELEPHONE) 10 December 2020 (2020-12-10)<br>paragraphs [0025]-[0027], [0034]-[0051], fig. 2, 5, 9 | 1-8 |
| A | WO 2017/033550 A1 (NEC CORP) 02 March 2017 (2017-03-02)<br>entire text, all drawings | 1-8 |
| A | JP 2011-4264 A (FUJITSU LTD) 06 January 2011 (2011-01-06)<br>entire text, all drawings | 1-8 |
| A | JP 2020-53814 A (NIPPON TELEGRAPH & TELEPHONE) 02 April 2020 (2020-04-02)<br>entire text, all drawings | 1-8 |
| A | KUDO, R. et al. Coherent Optical Single Carrier Transmission Using Overlap Frequency Domain Equalization for Long-Haul Optical Systems. Journal of Lightwave Technology. 15 August 2009, vol. 27, no. 16, pp. 3721-3728<br>entire text, all drawings | 1-8 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 625 845 A1

**INTERNATIONAL SEARCH REPORT**
Information on patent family members

International application No.

**PCT/JP2022/043554**

| Patent document cited in search report | | | Publication date (day/month/year) | Patent family member(s) | | | Publication date (day/month/year) |
|---|---|---|---|---|---|---|---|
| WO | 2020/245984 | A1 | 10 December 2020 | US | 2022/0224415 | A1 | |
| | | | | paragraphs [0040]-[0042], [0047]-[0061], fig. 2, 5, 9 | | | |
| | | | | EP | 3965319 | A1 | |
| | | | | CN | 114097184 | A | |
| WO | 2017/033550 | A1 | 02 March 2017 | US | 2018/0248582 | A1 | |
| | | | | entire text, all drawings | | | |
| JP | 2011-4264 | A | 06 January 2011 | US | 2010/0325184 | A1 | |
| | | | | entire text, all drawings | | | |
| | | | | EP | 2270981 | A2 | |
| | | | | CN | 101931381 | A | |
| | | | | KR | 10-2010-0136924 | A | |
| JP | 2020-53814 | A | 02 April 2020 | US | 2022/0038180 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. ISHIHARA** ; **T. KOBAYASHI** ; **R. KUDO** ; **Y. TAKATORI** ; **A. SANO** ; **E. YAMADA** ; **H. MASUDA** ; **M. MATSUI** ; **M. MIZOGUCHI** ; **Y. MIYAMOTO**. Frequency-domain equalisation without guard interval for optical transmission systems. *ELECTRONICS LETTERS*, 04 December 2008, vol. 44 (25)